# EUROPEAN PATENT APPLICATION

(11) **EP 4 799 795 A1**
(43) Date of publication of application: **02.09.2026**
(21) Application number: 25161163.8
(22) Date of filing: 28.02.2025
(51) Int. Cl.: B29C 64/112, B29C 64/393, B29D 11/00, B33Y 10/00, B33Y 30/00, B33Y 50/02, B33Y 80/00

(54) **METHOD FOR CALIBRATING AN APPARATUS FOR MANUFACTURING AN OPTICAL ELEMENT AND METHOD AND APPARATUS FOR MANUFACTURING AN OPTICAL ELEMENT**

(71) Applicant: Carl Zeiss Vision International GmbH, 73430 Aalen (DE)
(72) Inventor: STROISCH, Marc, 73430 Aalen (DE); REESE, Martin, 73430 Aalen (DE); GLOEGE, Thomas, 73430 Aalen (DE)
(74) Representative: Pfiz/Gauss Patentanwälte PartmbB

(57) **Abstract**

The application relates to a method for calibrating an apparatus (10) for the additive production of an optical element, in particular a spectacle lens, in a printing process by applying droplets of printing ink (23), the apparatus (10) comprising a print head (12) with a print head nozzle arrangement (26) which has a plurality of print head nozzles (30.n.m) for producing droplets of printing ink (23). According to the invention, a mean droplet volume Vm of the printing ink droplets (23) is determined as a calibration variable of the apparatus (10) for additive manufacturing of the optical element. The invention also relates to the manufacture of an optical element, in particular an optical element from the group consisting of a lens, intraocular lens, contact lens, spectacle lens and an apparatus (10) for the manufacture of an optical element, in particular a spectacle lens.

## Description

The invention relates to a method for calibrating an apparatus for additively manufacturing an optical element in a printing process by applying droplets of printing ink, wherein the apparatus includes a print head having a print head nozzle assembly having a plurality of print head nozzles for generating droplets of printing ink. Furthermore, the invention relates to the manufacture of an optical element as well as an optical element and an apparatus for manufacturing an optical element.

Such a method for calibrating an apparatus for additively manufacturing an optical element in a printing process by applying droplets of printing ink is known from US 10,710,362 B2. This reference discloses the adjustment of the size of printing ink droplets provided by a print head used for the additive production of, for example, color filters and/or displays.

EP 3 311 994 A1 describes an apparatus and a method for manufacturing an optical element in the form of a lens using 3D printing.

In the present invention, an optical element is understood to be a glass or plastic body through which light rays can pass and thereby deflect them. An optical element within the meaning of the invention can be, for example, a transparent body with two optically effective surfaces, i.e. surfaces which refract the light and which lie opposite one another. An optical element within the meaning of the invention can in particular be a so-called gradient lens. An optical element within the meaning of the invention can also be a spectacle lens which is designed for insertion into a spectacle frame. A spectacle lens can be, for example, a flat lens according to section 3.6.3 of DIN EN ISO 13666:2019-12 or a corrective lens according to section 3.5 of DIN EN ISO 13666:2019-12 (section 3.5.1), a protective lens (section 3.5.4), an absorbing lens (section 3.5.5), a tinted lens (section 3.5.6), a clear lens (section 3.5.7), a uniformly tinted lens (section 3.5.8), a gradient tinted lens (section 3.5.9), a photochromic lens (section 3.5.11) or a polarizing lens (section 3.5.12).

The technical object of the invention is to provide a method for calibrating an apparatus for additive manufacturing of an optical element and to provide a method and an apparatus for manufacturing an optical element which enables optical elements with good optical properties.

This object is achieved by the method for manufacturing an optical element as defined in claim 1, the manufacturing method as defined in claim 8 and the apparatus for manufacturing an optical element as defined in claim 14.

Advantageous embodiments and further embodiments of the invention are given in the dependent claims.

A method according to the invention relates to calibrating an apparatus for additive manufacturing of a spectacle lens in a printing process by applying droplets of printing ink, wherein the apparatus includes a print head with a print head nozzle arrangement having a plurality of print head nozzles for producing droplets of printing ink. The method provides that a mean droplet volume Vm of the printing ink droplets is determined as a calibration parameter of the apparatus.

In this context, the mean droplet Volume Vm is understood as the arithmetic mean droplet volume Vm. The arithmetic mean droplet volume Vm is the sum of the volumes of all ink droplets divided by the count of all printed ink droplets.

The manufacturing method according to the invention comprises the following steps:
i. providing a substrate,
ii. providing a three-dimensional model of the optical element,
iii. digitally slicing of the three-dimensional model into individual layers, each of which is divided into a grid with surface elements,
iv. providing at least one printing ink, preferably 3D printing ink,
v. construction of the optical element from the sum of the individual layers from step iii. by means of a printing process on the substrate, in which the printing ink is applied in the form of droplets to defined surface elements of a grid of a single layer, the printing ink droplets being produced by a print head nozzle arrangement with a plurality of print head nozzles,
wherein the print head nozzles of the print head nozzle arrangement are controlled by means of a control rule which takes into account a mean printing ink droplet volume Vm determined in a method according to one of claims 1 to 7 for calibrating an apparatus for additively manufacturing a spectacle lens in a printing process by applying printing ink droplets.

The substrate, which may be pre-coated, defines the surface topography of the surface of the optical element that is adjacent to the substrate. The surface of the optical element opposite this surface is specifically built up using the printing process, in particular the 3D printing process.

The information about the individual layers to be printed on top of each other is made available to a printer, in particular a 3D printer, which contains a print head with a print head nozzle arrangement which has a plurality of print head nozzles in order to build up an optical element as a stack of individual printed layers which lie at least partially on top of each other. A layer is printed by applying volume elements with printing ink, preferably 3D printing ink, to a surface by means of print head nozzles of a print head nozzle arrangement in a print head. The smallest possible volume element corresponds to the volume of a droplet of printing ink, preferably 3D printing ink, which is applied to a point on a surface on which printing takes place.

Several layers of volume elements arranged next to each other can be positioned on top of each other, i.e. printed on top of each other. The surface area and the number of layers to be printed on top of each other depend on the desired dimensions of the optical element to be printed. The individual layers can be cured layer by layer, preferably using UV light, until the radiation-curable component has completely reacted. Alternatively, an incomplete curing can be carried out after printing each layer and a final curing can be carried out after printing all layers, preferably by means of UV light.

3D inkjet printing is an attractive and promising way of applying one, two or more materials in any desired distribution. Liquid material formulations are used, i.e. fluids that can be cured using physical or chemical processes. The different fluids are suitably distributed within layers, i.e. arranged in a plane that can extend in an x and a y direction, and stacked accordingly, i.e. in the z direction perpendicular to the plane.

In inkjet printing, the structure size is essentially determined by the size of the individual droplets, whose volume lies in a range of around 1 pl to 50 pl, which corresponds to a droplet diameter of around 10 µm to 50 µm. Depending on the print head, specific target values result with regard to the droplet geometry, which then follows directly from the mechanical geometry of the print head and has direct consequences, for example, on the viscosity of the fluids. As described in US 7,611,754, for example, tolerances of over ±5% for the alignment and volume of the droplets occur in inkjet printing, which is clearly too much for optical applications.

When producing optical components using inkjet printing, it is important to avoid structures resulting from droplet dispensing. It is therefore advantageous to let the droplets run together first and then partially or fully cure the liquid layer with the corresponding material distribution before the next layer is applied.

Depending on the droplet size and the print resolution, the thickness of individual layers is typically around 2 µm to 50 µm.

Layers of constant thickness on a substrate can be produced by a print head with a print head nozzle assembly emitting droplets of printing ink provided by the print head nozzles at a constant rate, i.e. a constant printing frequency Df, the print head nozzle assembly being moved at a constant velocity relative to the substrate.

In the following, the so-called print frequency Df of a print head nozzle or a print head is understood to be the frequency with which one or all print head nozzles of a print head printing ink droplets.

In the following, the so-called maximum print frequency Dfm of a print head is understood to be the frequency resulting from the ratio of the relative velocity between the print head and the substrate and the print resolution of the print head possible in this case, i.e. the ratio of the relative velocity between the print head and the substrate and the maximum possible number of printing ink droplets that can be spatially resolved and thereby printed separately from each other on a standard distance that has a specified length.

For so-called full-surface printing, the actual print frequency Df and the maximum print frequency Dfm are the same. Operating the print head for full-surface printing, i.e. at the maximum print frequency Dfm, results in the printing of a layer with a maximum layer thickness.

The inventors have recognized that the volume of printing ink droplets successively released from a single print head nozzle in a print head nozzle assembly depends on the actual print frequency Df.

The inventors make use of that the volume of printing ink droplets only vary minimally from droplet to droplet, provided the printhead operating parameters remain constant, and that the variations in the volume of printing ink droplets provided by different print head nozzles are largely constant, so that it is possible to compensate for them when these variations are determined by measurement.

However, the inventors have also recognized that when operating a print head, the droplet volume of the printing ink droplets produced by individual print head nozzles is not stable per se. It turns out that the droplet volume of the printing ink droplets is subject not only to statistical fluctuations but also to systematic fluctuations, which must be taken into account in order to produce a layer with a local layer thickness that meets specifications.

The inventors have found that the systematic variations in the droplet volume of the printing ink droplets of a print head depend individually on a print head and the operating parameters under which the print head is operated.

If a print head is operated in such a way that not all possible dots are printed on a surface, e.g. to produce a layer with a reduced layer thickness compared to a maximum layer thickness, then the print frequency Df for the individual print head nozzles of the print head must be below the maximum print frequency Dfm of the print head. By changing the print frequencies of individual print head nozzles of a print head during printing, layers with a location-dependent, variable layer thickness can be produced.

Layers with a reduced layer thickness compared to the maximum layer thickness can be produced by reducing the print frequency Df of all nozzles compared to the maximum print frequency Dfm or by switching off individual nozzles while the remaining nozzles continue to operate at maximum print frequency. Since phenomena such as so-called crosstalk occur here, i.e. the dependence of the droplet volume of generated printing ink droplets on whether adjacent nozzles are working simultaneously, the decision as to how thinner layers are realized has an effect on the droplet volume of generated printing ink droplets.

It is therefore advantageous if the mean droplet volume Vm of the printing ink droplets is determined as a function of a variable number Z of printing ink droplets uniformly applied to a standard surface A in a time window of length Δt. In this way, the dependence of the mean droplet volume Vm of printing ink droplets provided by a print head, as recognized by the inventors, can be taken into account in the manufacture of an optical element.

Furthermore, it is advantageous if a number z of printing ink droplets provided by each print head nozzle of the print head per time unit t, i.e. the printing frequency Df:= n/t of each print head nozzle satisfies the following relationship: Df ≤ 12 kHz, preferably Df ≤ 10 kHz. In this way, it can be ensured that the mean droplet volume Vm of the printing ink droplets is essentially invariant to the number of printing ink droplets provided by a print head nozzle of the print head per unit of time. It should be noted, however, that when using special printing inks, Df can be as high as 44 kHz or even higher up to 100 kHz.

An advantageous further development of the invention provides that the mean droplet volume Vm of the printing ink droplets that is determined fulfills the following relation: $Vm = a nd / Nd + b ,$ a and b being linear regression fit parameters which are determined based on at least two different droplet volume values which are measured for different values of nd/Nd which is the ratio of the number nd of print head nozzles being active when a layer of constant layer thickness is produced on a surface area A of a substrate by means of the print head and the total number Nd of print head nozzles of the print head.

The mean droplet volume Vm of the printing ink droplets can be determined, for example, by determining the weight of a known number of printing ink droplets of a printing ink with a known printing ink density applied to a standard surface.

Alternatively, it is possible to determine the mean droplet volume Vm of the printing ink droplets by determining a volume of a printing ink layer produced on a standard surface A by depositing a known number Z of printing ink droplets. By subjecting the printing ink layer on the standard surface to a curing and/or drying process before determining its volume on the standard surface, the volume reduction caused by the curing can be taken into account for the mean droplet volume.

It is also an idea of the invention to take into account a mean droplet volume Vm of printing ink droplets, which is dependent on the operating state of an apparatus for the additive manufacture of a spectacle lens with a print head with print head nozzles which serve for the provision of printing ink droplets of a printing ink, in a control rulefor controlling the print head nozzles.

One particular finding of the invention is that compensation factors or fudge factors for the mean droplet volume of printing ink droplets must be determined experimentally, since they depend individually on print heads and fluids as well as the associated printing processes.

Another finding of the invention is that compensation factors or fudge factors to the mean droplet volume of printing ink droplets are often only stable in the short term and can be subject to long-term changes, the cause of which is, for example, ageing of print heads.

Against this background, the inventors have found that it is necessary to determine the mean droplet volume Vm of the print head nozzles of the print head with a certain regularity, depending on the operating state of an apparatus for the additive manufacturing of a spectacle lens with a print head.

To determine the compensation factors or fudge factors, it is particularly useful to proceed as follows:
Reference samples are produced for different layer thicknesses by printing defined layers on previously weighed substrates. The absolute weight increase is determined from the difference in weight between the substrate and the printed layers and a mean volume per droplet is calculated from a known number of printed droplets.

As this analysis is always averaged over all nozzles used, the result is not an individual droplet volume of the individual nozzle, but an arithmetic mean droplet volume Vm for a defined print frequency of the print head. The measurement can be carried out with different degrees of curing, with and without pinning or final curing, in order to test possible effects of polymerization on the weight.

It is advantageous to consider the dependence of the droplet volume of a printing ink droplet provided by a nozzle on the printing frequency and the distance to the next nozzle, which also provides a printing ink droplet at the same time, by determining the mean droplet volume for a large number of reference samples, which have a different layer thickness generated by applying printing ink droplets to a substrate.

The stochastic control of print head nozzles in a so-called dithering process generates a binary image from a grayscale image that describes a spatially resolved layer thickness, whereby the amount of material printed for the binary image corresponds to the desired amount of material, i.e. the specified, desired layer thickness at a specific location. For each nozzle, the analog print image, i.e. the pixel of the grayscale image printed by the nozzle, is assumed and the error that occurs when the nozzle is used to print at a specific location is taken into account. This error is then redistributed to surrounding nozzles by increasing or decreasing the probability that these nozzles will print.

The inventors have recognized that when the print head nozzles of a print head are operated in a dithering process, a predetermined spatially resolved layer thickness can be printed with only a small error and consequently precisely by stochastically controlling the print head nozzles if the printing frequency Df and the distance of a nozzle that provides a droplet of printing ink to a next nozzle that also provides a droplet of printing ink at the same time are taken into account for the mean droplet volume Vm.

It should be noted that the weight of the volume to be printed when preparing a reference sample must be within the measuring range of the measuring apparatus used to determine the weight of the reference sample. A given sensitivity of the measuring apparatus means that there is a lower limit for a measurable number of droplets. When preparing a reference sample, an upper number of droplets as a limit value must not be exceeded in order to prevent the weight of the reference sample from falling outside the measuring range of the measuring apparatus used to determine the weight of the reference sample. Care must also be taken to ensure that material in the form of uncured and unpinned fluid applied to a substrate by printing when preparing a reference sample does not run off the substrate of the reference sample, so that the result of the weight measurement is falsified as a result. It is therefore advantageous to use a substrate that prevents this, for example by the presence of walls.

The test pattern created on the substrate of a reference sample by applying droplets of printing ink ideally has a geometry that ensures that the width of the test pattern at least corresponds to the width of objects that are to be printed using the print head. This ensures that effects such as the so-called print head smile, i.e. the fact that the droplet volume of droplets can vary from nozzle to nozzle from each nozzle of the print head, are implicitly taken into account when determining the mean droplet volume.

It should be noted that in addition to simple rectangular patterns with a rectangular contour, any other patterns are possible as test patterns for a reference sample, e.g. test patterns with an elliptical contour or the contour of a spectacle lens.

It is advantageous to produce reference samples for determining a mean droplet volume Vm of printing ink droplets under the process conditions that also occur during the production of objects by applying printing ink droplets to a substrate.

This makes it possible to ensure that process-typical factors such as the so-called print head shift, i.e. the measure that the print head is shifted orthogonal to the printing direction from layer to layer which ensures that volume deviations and other constant and stable errors are distributed over the surface of the sample, and electrostatic charging of the print head during printing correspond to each other in the production of reference samples on the one hand and the production of objects on the other.

It is important to ensure that no electrostatic charges are generated in the measuring apparatus used to determine the weight of a reference sample that could affect a weight measurement at the lower end of its measuring range.

It has been shown that it is advantageous to limit the maximum print frequency Dfm, at which the print head nozzles of the print head are operated, to such an extent that there is a linear relationship between the print frequency Df and the mean droplet volume of printing ink droplets. It should be noted that this is no longer the case at higher maximum print frequencies, but this does not mean that the process is restricted in principle.

The inventors have recognized that a printing process error, which can be measured as a relative deviation of the contour of an object produced in an additive process from a predetermined design, e.g. an optical design, is caused by the dependence of the droplet volume of printing ink droplets produced by a print head nozzle on the printing frequency. The inventors have found that in the absence of compensation, the droplet volume of the printing ink droplets generated by the print head nozzles of a print head can fluctuate by 24 pl to 26pl, which corresponds approximately to a volume error of 7% in the printing ink droplets generated. The latter is not acceptable in an optical system, as the resulting structure sizes are optically effective. In extensive tests, the inventors have established that the relative printing process error can be reduced to less than 1% by suitable control of the print head nozzles of a print head.

One idea of the invention is in particular to produce reference samples without correction factors with different layer thicknesses in a dithering process using the print head, whereby favorable process conditions are applied, which are then used in the additive manufacturing of an object using the print head.

This can then be used to calculate a droplet volume for the prevailing process conditions, which is dependent on the local layer thickness of the reference sample and thus in particular on a position perpendicular to the printing direction. This information is then processed when a dithering process is carried out.

The advantage of producing reference samples without correction factors with different layer thicknesses in a dithering process using the print head is that the material shrinkage and any droplet volume changes over the width of a print head are also taken into account. However, by selecting a test sample whose width is greater than the width of an object that is printed after calibrating the apparatus for the additive manufacture of a spectacle lens, it is possible to prevent the above-mentioned edge distortion from affecting the determination of a mean droplet volume. **It** should be noted that this may reduce the print head shift.

A mean droplet volume Vm can also be determined by evaluating the height profile of a reference sample produced by applying printing ink to a substrate, e.g. by calculating mathematical continuations of the contour of a determined height profile, from which a local mean volume of printing ink droplets for a reference sample can then be determined.

**It** should also be noted that the determined height profile can be further processed before evaluation with the aim of determining a local mean droplet volume Vm of printing ink droplets. For example, frequency filters can be applied to the determined height profile or the determined height profile can be described as a mathematical function. In this way, it is possible to deduce a local mean droplet volume Vm from a locally determined layer thickness.

A height profile can be measured, for example, with a so-called profilometer, e.g. with a profilometer such as those produced and sold by Accretech, or with an optical laser scanner, e.g. the 3D laser scanner scanControl 3D from Micro-Epsilon.

However, so-called line sensors, which enable the characterization of a reference sample in an apparatus for the additive manufacturing of an optical element, are also suitable for measuring height profiles.

In addition, it is possible to determine the height profile of a reference sample using a 2D scan with simultaneous reduction to just one calibration value or also using a 3D scan if there are systematic deviations in the printing direction. It should be noted that during the production of reference samples, phenomena such as e.g. edge throw-up can occur, i.e. the occurrence of an increased sample thickness at the edge of a substrate on which drops of printing ink are applied, the cause of which may lie, for example, in the surface tension of the printing ink applied to a substrate. An apparatus according to the invention for producing an optical element can, for example, contain a print head, as used in a 3D printer, which produces volume elements via a piezoelectric element using a drop-on-demand process known from inkjet printing and which only ever places a volume element exactly where it is needed. An apparatus according to the invention for producing an optical element can have several such print heads. The print head can be moved over a substrate and/or the substrate can be displaced under the at least one print head for the production of an optical element, e.g. a lens, according to the above-mentioned method of the invention.

The production of a lens according to the method of the invention, for example, can take place in the form of a 3D printing process which makes use of a multi-jet modeling or polyjet process. The print head in a printer suitable for producing a lens according to the method of the invention can be, for example, the Xaar 1001 print head (Xaar), one of the Spectra S-Class, Spectra SE3, Spectra SX3, Spectra Q-class print heads (Spectra), the KM512 print head (Konica Minolta) and/or the 256Jet S4 print head (Trident).

The resolution of a print head which is suitable for use in an apparatus according to the invention for producing an optical element is preferably at least 300 x 300 dpi, more preferably at least 600 x 600 dpi and particularly preferably at least 1200 x 1200 dpi.

The design of such a print head can be based on piezo technology in particular. Here, a piezo element is deformed by electrical pulses and the energy transferred to a fluid leads to the ejection of a droplet of printing ink. The type of pulse on the piezo element determines the shape, volume and speed of the ejected droplet, so that these three parameters can be controlled within certain limits.

The individual piezo elements of a print head cannot be controlled completely independently of each other. On the one hand, it is very difficult to isolate the electrical control of, for example, over 1000 nozzles in a print head from one another and, on the other hand, it has so far been impossible to achieve complete fluid dynamic separation of the cavities in the print head.

The piezo elements trigger a pressure wave with their movement, which is distributed via the fluid in the common reservoir of the print head. It is unfavorable if the pressure frequency and the resulting sound waves in the fluid lead to a resonance in the print head because this prevents stable droplet formation. In addition to such resonance phenomena, which must be avoided at all costs, there are also more subtle consequences depending on the distance between simultaneously firing nozzles.

The droplet volume of individual droplets of printing ink in a piezo print head depends, among other things, on whether or not simultaneously firing nozzles are adjacent on the nozzle plate of a print head nozzle arrangement. If neighboring nozzles shoot, the droplet volume in both nozzles decreases, which is also known as crosstalk. Crosstalk must therefore be included in the calculation of a layer thickness of a layer printed by means of the print head if the influence of crosstalk between nozzles of a print head nozzle arrangement in a print head on the size of printing ink droplets is to be taken into account.

In this context, adjacent means that the affected nozzles must be located closest on a nozzle row. In the case of a KM 1024i print head from Konica-Minolta with four rows of 256 nozzles each, this results in four rows in which crosstalk occurs independently.

Crosstalk does not immediately drop to zero when a nozzle is inactive between simultaneously firing nozzles, resulting in further correlations between volume decrease and nozzle spacing within a row. The effects become smaller with increasing distance.

It should be noted that in a print head with nozzles having a nozzle chamber, ink droplets can be generated not only by deforming the nozzle chamber of a nozzle by means of a piezo element, but also by transferring a heat pulse to the fluid in a nozzle chamber to generate pressure ink droplets, which causes the fluid to expand abruptly.

Print heads with nozzles that have a nozzle chamber into which a heat pulse can be introduced are known as TIJ systems. These print heads contain an electric resistance heater. The resistance heater is operated to generate droplets by applying electrical pulses to the resistance heater. The heat generated in this way is transferred to the fluid, used to produce droplets of printing ink, which expands abruptly as a result and is then forced through the nozzle opening of the nozzle due to the geometry of the nozzle chamber. Printing ink fluid containing solvents that evaporate when heated is particularly suitable for generating printing ink droplets using TIJ systems.

In thermal inkjet print heads, as with print heads based on piezo technology, fluid reservoirs are formed that communicate with each other and are coupled as a result. As a result, the supply of a droplet influences the droplet size of droplets that are produced at the same time by a nozzle adjacent to the nozzle or by another nozzle. The phenomenon of crosstalk can therefore also be found in thermal inkjet print heads.

If thermal inkjet print heads and print heads based on piezo technology generate ink droplets by controlling nozzles at a constant frequency, the problem of crosstalk becomes less important because it is a constant deviation that occurs reproducibly and can therefore be easily measured and taken into account as a constant in the calculation of a volume to be printed in the form of a layer or when printing a volume.

In order to achieve a droplet volume that is constant and essentially independent of the operating state of the print head, a print head can basically be operated in such a way that a desired layer thickness or a desired number of ink droplets is printed without using adjacent nozzles. However, a considerable part of the theoretical resolution of the print head is sacrificed, in the case of the KM 1024 print head from Konica-Minolta, for example, at least 50 %.

If the print head nozzles of a print head are controlled stochastically, i.e. dithered, when generating a layer, it is accepted that statistically distributed nozzles that are arranged next to each other generate droplets of printing ink at the same time, i.e. shoot at the same time, so that the volume of printing ink droplets generated also follows a statistical distribution. If adjacent nozzles produce droplets of printing ink at the same time, the droplets of printing ink produced are smaller than in the case of nozzles that are not directly adjacent.

This phenomenon can lead to deviations between a volume printed in a layer by a print head and the target volume of a model.

Preferably, at least one UV light source is mounted on at least one side of the print heads used, particularly preferably at least one UV light source is mounted on at least two sides of the print head used. Alternatively, several print heads can, for example, be installed parallel to the print nozzle rows of the print heads in a 3D printer and selectively controlled. The UV light source can then consist of several UV light sources also connected in parallel or of a few large UV light sources.

A printing ink that can be used in the 3D printing process is preferably used for the layered structure of the lens. "Layered build-up" comprises a successive deposition of the printing ink, preferably 3D printing ink. The successive deposition can take place both next to each other in one area and on top of each other in height. If, for example, a first deposition of the printing ink, preferably 3D printing ink, takes place in one area on the pre-coated substrate, a further layer can be printed over the entire area of the first deposition or a part of the area of the first deposition. Preferably, the successive deposition of the printing ink, preferably 3D printing ink, first takes place next to each other in one area before a further successive deposition of the printing ink, preferably 3D printing ink, then takes place in the layer above.

The pre-coated substrate to be printed on can be a substrate which, starting from the substrate, is covered a) optionally with a removable adhesive layer and b) with the coating desired on the spectacle lens. The optionally present adhesive layer is a layer applied directly to the substrate, the adhesion of which can be changed by external influences, such as a change in temperature or by irradiation, and thus the optical element, e.g. the spectacle lens produced by means of a printing process, preferably a 3D printing process, together with the coating present on the optionally present detachable adhesive layer can be detached from it. In this way, an optical element, e.g. a spectacle lens can be produced in the simplest way, which is already covered with a desired coating on one surface. Any residues of the optional removable adhesive layer remaining on the resulting coated spectacle lens can be removed using a cleaning process.

The pre-coated substrate can be convex, concave or flat. The surface topography of the pre-coated substrate can be selected from the group consisting of spherical, aspherical, toric, atoric, progressive and plano.

The substrate can, for example, be made of polytetrafluoroethylene, glass or metal. In one embodiment, the substrate may have a release layer comprising alkyltrihalosilanes, preferably C12 to C22 alkyltrichlorosilanes and most preferably octadecyltrichlorosilane.

The pre-coated substrate can be coated with at least one layer selected from the group consisting of at least one hard coating layer, at least one anti-reflective coating layer, at least one electrically conductive or semi-conductive coating layer, at least one anti-fog coating layer and/or at least one clean coat layer. Preferably, the pre-coated substrate is coated with at least one anti-reflective layer, at least one hard coating layer and at least one clean coat layer.

One idea of the invention is that the print head nozzle arrangement used in the method for additively manufacturing an optical element in a printing process by applying droplets of printing ink in a nozzle line comprises a plurality of print head nozzles which are arranged adjacent to one another, can be controlled simultaneously and each generate a droplet of printing ink when they are controlled, the control rule taking into account a probability with which print head nozzles arranged adjacent to one another simultaneously generate a droplet of printing ink.

In particular, it is an idea of the invention that the control regulation takes into account a printing ink viscosity and/or a printing ink temperature and/or a control voltage for print head nozzles.

It is advantageous if Df, i.e. the number of ink droplets provided by each print head nozzle of the print head per unit of time satisfies e.g. the following relationship: Df ≤ Dg, where Dg is the maximum printing frequency below which there is a linear dependence of the mean droplet volume Vm on the printing frequency Df.

For Dg, for example, the following may apply: Dg ≈ 12 kHz or 10 kHz.

One idea of the invention is that the print head nozzles of the print head nozzle arrangement are controlled on the basis of a control rule which assigns a print head nozzle to the surface element of the grid of a layer and which causes the generation of a droplet of printing ink by means of the assigned print head nozzle as a function of a criterion, which takes into account a predefined thickness t(n,m) of the layer in the surface element of the grid and a thickness error e(n,m) which is determined from a comparison of the predefined thickness t(n,m) of the layer for a surface element of the grid of an individual layer and an assumed thickness increase DZ, for which applies:
DZ = 0 if no droplet is generated, and
DZ = constant when a droplet is generated.

In this way, it is possible to minimize the deviation of the actual thickness of a layer produced by applying individual droplets of printing ink from a predefined thickness.

It is particularly advantageous if the thickness error e(n,m) of the predetermined thickness t(n,m) of the layer in the surface element of the grid is added to a predetermined thickness t(n,m) of at least one further surface element of the grid using a correction factor of the predetermined thickness of the layer in order to obtain a corrected thickness for this surface element as a predetermined thickness t(n,m).

In this way, it is possible to take account of the fact that a single droplet of printing ink, when it reaches the substrate or a layer on the substrate, spreads depending on the viscosity of the printing ink, its surface tension and the interfacial tension occurring at the interfaces between droplet and substrate or between droplet and layer on the substrate and covers a surface area comprising several surface elements of the grid of a layer, each of which is assigned a print head nozzle. This measure makes it possible to reduce an undesirable deviation of the thickness of a layer applied to a substrate or the thickness of a layer applied to a layer on a substrate from a target value.

A preferred embodiment of the invention provides that the grid has rows and columns in which the surface elements are arranged, the print head nozzles of the print head nozzle arrangement being displaced relative to the substrate in a direction parallel to the columns. The thickness error e(n,m) of the predetermined thickness t(n,m) of the layer in an area element of the grid is added to the predetermined thickness t(n,m) of the layer in the area element of the grid to a predetermined thickness t(n,m) of a first further area element of the grid using a first correction factor, which is adjacent to this surface element in a row of the grid, if the surface element is not a surface element in a last row or in a first column or in a last column of the grid, in order to obtain a corrected thickness for this surface element as a predetermined thickness t(n,m). The predetermined thickness t(n,m) of the layer in the area element of the grid is added to a predetermined thickness t(n,m) of a second, further area element of the grid by applying a second correction factor to the predetermined thickness of the layer which is adjacent to this area element in a column of the grid if the area element is not an area element in a last row or in a first column or in a last column of the grid, in order to obtain a corrected thickness for this surface element as a predetermined thickness t(n,m), and the predetermined thickness t(n,m) of the layer in the surface element of the grid is added to a predetermined thickness t(n,m) of a third further surface element of the grid by applying a third correction factor to the predetermined thickness of the layer, which is adjacent to second further area element in a row of the grid, if the area element is not an area element in a last row or in a first column or in a last column of the grid, in order to obtain a corrected thickness for this area element as a predetermined thickness t(n,m), and the predetermined thickness t(n,m) of the layer in the area element of the grid to a predetermined thickness t(n,m) is added to a fourth further area element of the grid using a fourth correction factor of the predetermined thickness of the layer which is adjacent to the second further area element in a row of the grid, if the area element is not an area element in a last row or in a first column or in a last column of the grid, in order to obtain a corrected thickness for this area element as a predetermined thickness t(n,m).

In this way, an undesired deviation of the thickness of a layer applied to a substrate or a layer applied to a layer on a substrate from a target value can be optimized.

The criterion, which takes into account a predetermined thickness t(n,m) of the layer in the surface element of the grid and a thickness error e(n,m), which is determined from a comparison of the thickness t(n,m) of the layer predetermined for a surface element of the grid of an individual layer and an assumed thickness increase DZ, can be, for example, as follows: $tkorr \left[n, m\right] \geq k - tmax \left[n, m\right] ,$ with $tkorr \left[n+1, m\right] = t \left[n+1, m\right] + {c}_{1} e \left[n, m\right]$ $tkorr \left[n-1, m+1\right] = t \left[n-1, m+1\right] + {c}_{2} e \left[n, m\right]$ $tkorr \left[n, m+1\right] = t \left[n, m+1\right] + {c}_{3} e \left[n, m\right]$ $tkorr \left[n+1, m+1\right] = t \left[n+1, m+1\right] + {c}_{4} e \left[n, m\right]$ whereby $e \left[n, m\right] : = t \left[n, m\right] - p$
where p is the change in the layer thickness of the layer to be printed on this surface element caused by the application of a single droplet of printing ink with the assumed printing ink droplet volume v to a surface element in the nth column and the mth row of the grid,
where tmax(n,m) is a maximum layer thickness that can be printed on the substrate by means of the print head nozzles of the print head nozzle arrangement,
where t(n,m) is a layer thickness specified for the surface element in the nth column and the mth row of the grid of the layer,
where tkorr(n,m) is a layer thickness corrected for the area element in the nth column and the mth row of the grid of the layer and
where: ${\sum }_{i = 1}^{i = 4} {c}_{i} = 1 ,$
preferably e.g. ${c}_{1} = \frac{7}{16}$ and ${c}_{2} = \frac{5}{16}$ and ${c}_{3} = \frac{3}{16}$ and, ${c}_{4} = \frac{1}{16}$
and 0 < k < 1, preferably k = ½.

This makes it possible to ensure that an undesirable deviation of the thickness of a layer applied to a substrate or of a layer applied to a layer on a substrate from a target value is particularly small.

The invention may also provide that the thickness error e(n,m) of the predetermined thickness t(n,m) of the layer in the area element of the grid is added to a predetermined thickness t(n,m) of a further area element of the grid by applying a first correction factor to the predetermined thickness of the layer, which is arranged in the same line of the grid as the surface element and which, during a printing operation, can receive printing ink in the form of a droplet from a print head nozzle of the nozzle arrangement, which is arranged in a nozzle line of the nozzle arrangement adjacent to a print head nozzle which can provide printing ink in the form of a droplet for the surface element.

The criterion, which takes into account a specified thickness t(n,m) of the layer in the surface element of the grid and a thickness error e(n,m), which is determined from a comparison of the thickness t(n,m) of the layer specified for a surface element of the grid of an individual layer and an assumed thickness increase DZ, can then be, for example, as follows: $tkorr \left(n, m\right) \geq k - tmax \left(n, m\right) ,$ with $tkorr \left[n, m+1\right] : = t \left[n, m+1\right] + 0.4 e \left[n, m\right] ,$ $tkorr \left[n, m+z\right] : = t \left[n, m+z\right] + 0.3 e \left[n, m\right] ,$ $tkorr \left[n+1, m-1\right] : = t \left[n+1, m-1\right] + 0.3 e \left[n, m\right] ,$ $tkorr \left[n+1, m\right] : = t \left[n+1, m\right] + 0.1 e \left[n, m\right] ,$ $tkorr \left[n+1, m+1\right] : = t \left[n+1, m+1\right] + 0.1 e \left[n, m\right] ,$ whereby $z ∈ ℕ > 1$ and $e \left(n, m\right) : = t \left(n, m\right) - p$
where z is the number of nozzle rows of a print head and where p is the change in the layer thickness of the layer to be printed on this surface element caused by the application of a single droplet of printing ink to a surface element in the nth column and the mth row of the screen,
where tmax[n,m] is a maximum layer thickness that can be printed on the substrate by means of the print head nozzles of the print head nozzle arrangement,
where t[n,m] is a layer thickness specified for the surface element in the nth column and the mth row of the grid of the layer,
where tkorr[n,m] is a layer thickness corrected for the surface element in the nth column and the mth row of the layer's grid,
and where: 0 < k < 1, preferably k = ½.

It should be noted that the print head nozzle arrangement in a nozzle line may include a plurality of print head nozzles arranged adjacent to each other and simultaneously controllable, each of which produces a droplet of printing ink when controlled, the mean droplet volume for the print head nozzles including a probability with which print head nozzles arranged adjacent to each other simultaneously produce a droplet of printing ink so that a single layer in a defined area element of its grid has a predetermined thickness.

The assumed printing ink droplet volume may be an averaged volume for printing ink droplets of the print head nozzle assembly that individual print head nozzles of the print head nozzle assembly produce.

The mean printing ink droplet volume can be determined gravimetrically, for example, for the print head nozzles of the print head nozzle arrangement by determining the weight of a known number of printing ink droplets of a printing ink with a known printing ink density applied to a standard surface by means of the print head.

However, the mean printing ink droplet volume for the print head nozzles of the print head nozzle arrangement can alternatively also be determined, for example, by measuring a local thickness of a layer which is produced by means of the print head nozzle arrangement with a plurality of print head nozzles.

It is advantageous if the mean printing ink droplet volume for the print head nozzles of the print head nozzle arrangement is determined from at least one operating state variable that characterizes an operating state of the print head nozzle arrangement. In particular, the operating state variable can be at least one variable from the group print frequency, average number of printing ink droplets per area on the substrate, temperature of the print head, course of a control voltage for print head nozzles, printing ink viscosity. It is favorable if the following applies for the printing frequency Df: Df ≤ 12 kHz, preferably Df ≤ 10 kHz.

An optical element according to the invention is manufactured by means of a method as described above. An optical element according to the invention can be, for example, an optical element from the group consisting of a lens, intraocular lens, contact lens or spectacle lens.

An apparatus according to the invention for manufacturing an optical element includes a print head with print head nozzles which are used for providing droplets of a printing ink. There is a table which is designed to receive a substrate and which can be displaced relative to the print head in a plane in two mutually perpendicular directions x, y. The apparatus contains a computer with a program memory in which a computer program for controlling the print head nozzles is loaded. The computer program is used to control the print head nozzles taking into account an assumed printing ink droplet volume v.

The invention is explained in more detail below with reference to the schematic embodiments shown in the drawing.

It shows:
- Fig. 1: an apparatus for producing a spectacle lens, which contains a print head;
- Fig. 2: a top view of the print head with a print head nozzle arrangement and with a device for providing UV light;
- Fig. 3: a three-dimensional model of a spectacle lens divided into individual layers;
- Fig. 4: a grid for a layer of the model of a spectacle lens with surface elements;
- Fig. 5: a distribution of a given thickness of a layer on the substrate as a grayscale image;
- Fig. 6: a reference sample in the form of a substrate on which a layer produced by ejecting droplets of printing ink from a print head onto the substrate is formed; and
- Fig. 7: the height profile of the layer on the substrate;
- Fig. 8: a graph in which the mean volume Vm of the printing ink droplets provided by the print head for a first printing ink and for a further printing ink is plotted as a function of the relative number of active print head nozzles nd/Nd;
- Fig. 9: a graph in which the mean volume Vm of printing ink droplets is plotted as a function of a printing frequency f:= Z/Δt, where Z is the variable number of printing ink droplets applied uniformly to a standard area A in a time window of length Δt;
- Fig. 10: a control rule which converts the grayscale image of Fig. 5 describing a local layer thickness into a print image which is a black and white image and which indicates which print head nozzles provide a droplet of printing ink when printing ink is applied by means of the nozzle head;
- Fig. 11: the application of droplets of printing ink by means of the print head nozzle arrangement of the print head according to the control rules;
- Fig. 12: determining a control rule indicating which print head nozzles provide a printing ink droplet when applying printing ink by means of the nozzle head, to a predetermined thickness of a layer on a substrate;
- Fig. 13: an algorithm of the control rule;
- Fig. 14: a graph showing a mean droplet volume Vm of printing ink droplets from a print head nozzle as a function of the number n of inactive print head nozzles adjacent to the print head nozzle;
- Fig. 15: and
- Fig. 16: control rules for controlling the print head nozzles in the print head nozzle assembly of the print head; and
- Fig. 17: a graph showing a mean droplet volume Vm of printing ink droplets as a function of the relative number nd/Nd of active print head nozzles in the production of a layer with a constant layer thickness, where nd is the number of active print head nozzles and Nd is the total number of print head nozzles of the nozzle head.

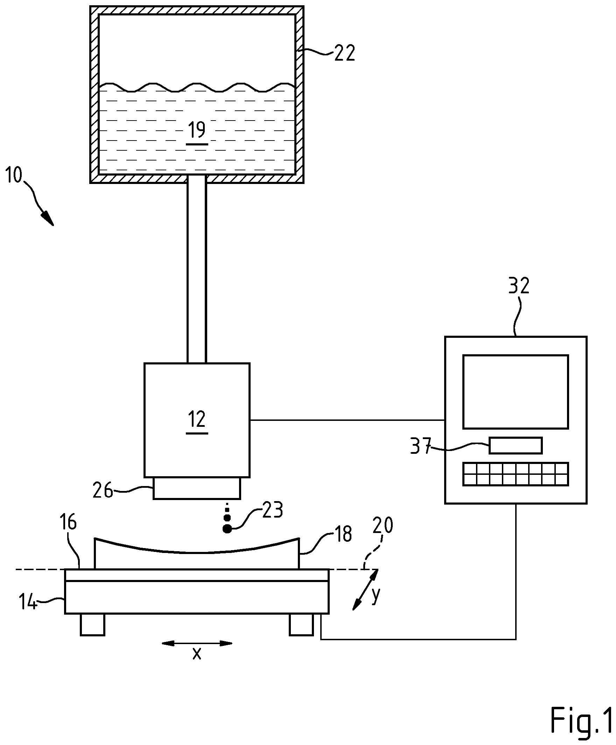

Fig. 1 shows an apparatus 10 for manufacturing an optical element, in particular a lens, e.g. a spectacle lens. The apparatus 10 contains a print head 12 and has a xy-displacement unit 14 with a table 16, which is used to hold a substrate 18. On the table 14, the substrate 18 can be displaced relative to the print head 12 in a plane 20 in two mutually perpendicular directions x, y. The apparatus 10 makes it possible to apply a 3D printing ink 19 from a reservoir 22 to the substrate 18 layer by layer in the form of printing ink droplets 23 by means of the print head 12 in order to produce a spectacle lens 24. It should be noted that in an alternative apparatus to the apparatus described above, it may be provided that the print head 12 is received on a displacement unit to move it relative to the substrate 118 arranged on a table 16. Furthermore, it should be noted that it may also be provided that both the print head 12 and the table 16 used for holding a substrate 18 may each be adjusted by means of an xy-displacement unit to move the print head 12 relative to the substrate 18.

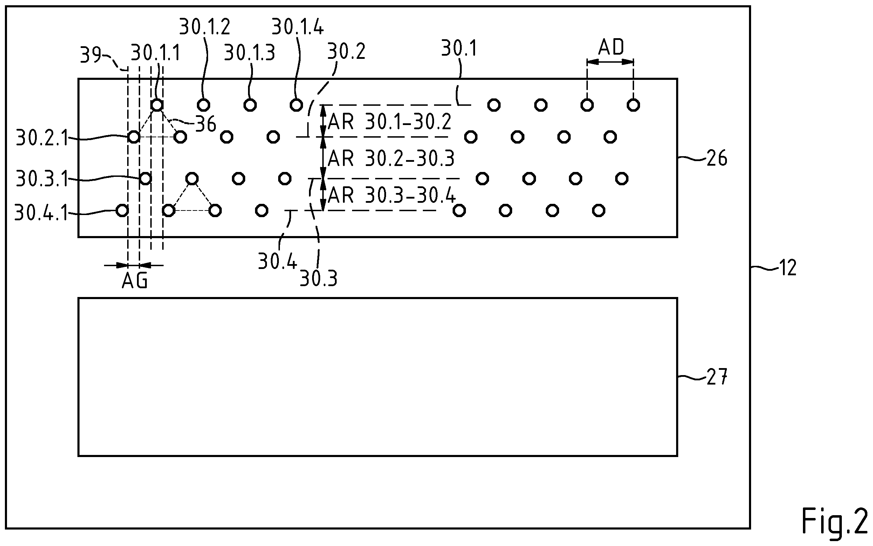

Fig. 2 is a top view of the print head 12 with a print head nozzle arrangement 26 and with a device 27 for providing UV light, which contains light-emitting diodes for curing 3D printing ink applied to the substrate 18 with UV light. The print head nozzle assembly 26 has print head nozzles 30.1.1, 30.1.2, 30.1.3 and 30.1.4 arranged in four mutually parallel, straight rows 30.1.1, 30.1.2, 30.1.3 and 30.1.4, ... 30.2.1, 30.2.2, 30.2.3, ... 30.3.1, 30.3.2, 30.3.3, ... each containing a piezo actuator. It should be noted that the print head 12 can in principle also be designed as a thermal inkjet print head.

Each of the rows 30.1, 30.2, 30.3 and 30.4 contains 256 print head nozzles. The distance AD between two neighboring print head nozzles 30.1, 30.2, 30.3 and 30.4 in a row is 282 µm. The distance AR30.1-30.2 of row 30.1 from row 30.2 is approx. 300 µm. The same applies to the distance AR30.3-30.4 of row 30.3 from row 30.4.

The print head nozzles 30.1.1, 30.1.2, ... of series 30.1 are arranged offset to the print head nozzles 30.2.1, 30.2.2, 30.2.3, ... of series 30.2 in such a way, that in each case one print head nozzle 30.1.1, 30.1.2, 30.1.3, ... of row 30.1 forms an isosceles triangle 36 with two adjacent print head nozzles 30.2.1, 30.2.2, 30.2.3 of row 30.2.

The print head nozzles 30.3.1, 30.3.2, 30.3.3 of row 30.3 are also arranged offset to the print head nozzles 30.4.1, 30.4.2, ... of row 30.4 in such a way that in each case one print head nozzle 30.3.1 of row 30.3 forms an isosceles triangle 36 with two adjacent print head nozzles 30.4.1, 30.4.2 of row 30.4.

The successive nozzles 30.1.1, 30.2.1, 30.3.1 and 30.4.1 in rows 30.1, 30.2, 30.3 and 30.4 are arranged offset to each other. They each lie on parallel straight lines 39 perpendicular to the direction of the course of the rows, whereby the following applies to the distance AG between two adjacent straight lines: AG = 3 x 23.5 µm = 70.5 µm.

The apparatus 10 shown in Fig. 1 has a computer unit 32 with a print head controller 37, which is used to control the piezo actuators of the print head nozzles 30.1.1, 30.1.2, 30.1.3 and 30.1.4 as well as 30.2.1, 30.2.2, 30.2.3, ... 30.3.1, ... 30.4.1, ... of the print head nozzle arrangement 26. By activating the piezo actuator of a print head nozzle 30.1.1, ..., a droplet of 3D printing ink can be generated and projected onto a defined position in a surface on the substrate 18, which is determined by the position of the print head nozzle 30.1.1, ... in the print head 12 and the setting of the xy-displacement unit 14 as well as the arrangement of the substrate 18 on the table 16 of the displacement unit 18.

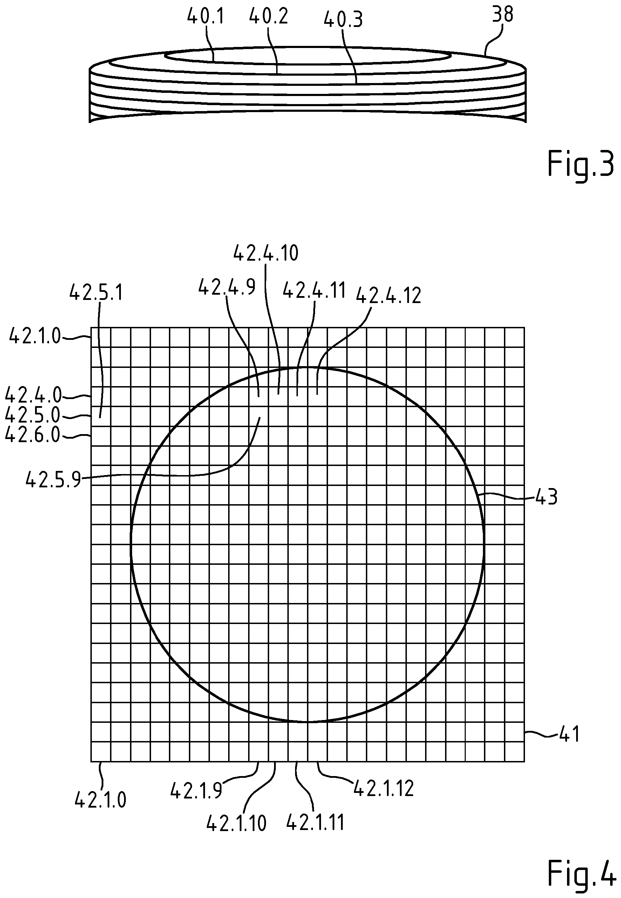

Fig. 3 shows a three-dimensional model 38 of a lens in the form of a spectacle lens, which is divided into individual layers 40.1, 40.2, 40.3, 40.4 ....

Each of the layers 40.1, 40.2, 40.3, 40.4 ... is in turn divided into a grid with square surface elements.

Fig. 4 shows the grid 41 of layer 40.3 with the surface elements 42.1.1, 42.1.2, 42.1.3, ... 42.2.1, 42.2.2, 42.2.3, ... 42.3.1, 42.3.2, 42.3.3, ..., into which a surface 43 of layer 40.3 is divided. The grid has N columns and M rows in which the surface elements are arranged, whereby for N, M, for example, the following can apply: N = 10000 and M = 15000. The surface elements 42.1.1, 42.1.2, 42.1.3, 42.1.4, ... are arranged next to each other in a row 42.1.0 of the grid 41. The same applies to the surface elements 42.2.1, 42.2.2, 42.2.3, 42.2.4 or 42.3.1, 42.3.2, 42.3.3, 42.3.4, which are also arranged next to each other in a row 42.2.0 or 42.3.0 of the grid 41. The surface elements 42.1.1, 42.2.1, 42.3.1, 42.4.1 ... on the one hand and the surface elements 42.1.2, 42.2.2, 42.3.2, 42.4.2, ... and 42.1.3, 42.2.3, 42.3.3, 42.4.3, ... and 42.1.4, 42.2.4, 42.3.4, 42.4.4, ... on the other hand are arranged next to each other in different columns 42.0.1, 42.0.2, 42.0.3 and 42.0.4.

By displacing the print head nozzle arrangement 26 of the print head 12 relative to a substrate 18 parallel to the columns 42.0.1, 42.0.2, 42.0.3, ... of the grid 41 at a uniform velocity, it is possible by controlling the print head nozzles 30.1.1, 30.1.2, ... for each of the surface elements 42.1.1, 42.2.1, of the grid 41, that exactly one droplet 23 of printing ink 19 or no droplet 23 of printing ink is arranged in it.

Each fourth surface element 42.1.1, 42.1.4, ... in a row of the grid 41 receives printing ink from two print head nozzles 30.1.1, 30.1.2, ... arranged adjacent to each other in a nozzle row 30.1, 30.2.1, ... 30.2.1, 30.2.2, ..., 30.3.1, 30.3.2, ... . When the print head 12 is in operation, surface elements of the grid 41, which are arranged in the four different adjacent rows 42.1.0, 42.1.1, 42.1.2, ..., receive printing ink from print head nozzles 12, which are located in different nozzle rows 30.1, 30.2, 30.3, 30.4 of the print head 12.

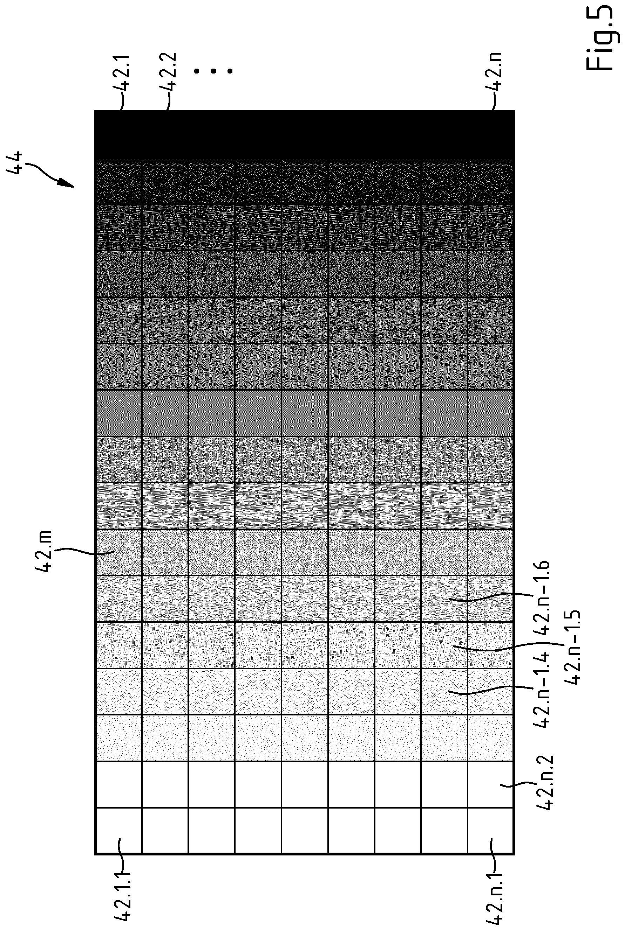

Fig. 5 shows a grayscale image 44 of a distribution of a predetermined thickness of a layer 40 on the substrate 18. The local grayscale in the grayscale image is a measure of the local thickness of the layer.

The local thickness of the layer is specified by digitally cutting up a three-dimensional model 38 of a spectacle lens and dividing it into a grid with surface elements 42.n.m with n = 1, 2, 3 ... and m = 1, 2, 3, ..., which has rows 42.n with n = 1, 2, 3, ... and columns 42.m with m = 1', 2', 3', ....

In order to produce the layer 40 with the predetermined, generally locally varying thickness, the print head nozzles 30.1.1, ... of the print head nozzle arrangement 26 are actuated in a clocked manner, taking into account an assumed printing ink droplet volume v, whereby the substrate 18 is displaced relative to the print head 12.

The assumed printing ink droplet volume v can be, for example, a mean printing ink droplet volume Vm, which is determined for the print head nozzles 30.n.m, n = 1, 2, 3, ...; m = 1, 2, 3, ... of the print head nozzle arrangement 26 for an operating state variable characterizing an operating state of the print head nozzle arrangement 26. Such a possibly multi-dimensional operating state variable can be, for example, a printing frequency with which the print head nozzle arrangement 26 is operated in the print head 12 and/or a relative number n/N of print head nozzles 30.n.m, which simultaneously provide a droplet of printing ink when the print head 12 is operated, and/or a temperature T of the print head and/or a control voltage for print head nozzles 30.n.m, n = 1, 2, 3, ...; m = 1, 2, 3, ... of the print head nozzle arrangement 26 and/or a printing ink viscosity.

The determination of an averaged printing ink droplet volume Vm can be carried out, for example, in a gravimetric measurement, in which printing ink droplets are applied to a substrate 16 by means of the print head 12 on the basis of a control specification in an exactly defined number of printing ink droplets 23 and the substrate is then weighed.

As an alternative to a gravimetric determination, the mean printing ink droplet volume for the print head nozzles 30.n.m, n = 1, 2, 3, ...; m = 1, 2, 3, ... of the print head nozzle arrangement 26 can also be determined by measuring a local thickness of a layer which is produced by means of the print head nozzle arrangement 26 with a plurality of print head nozzles 30.n.m, n = 1, 2, 3, ...; m = 1, 2, 3, ... at a specific operating state variable of the print head nozzle arrangement.

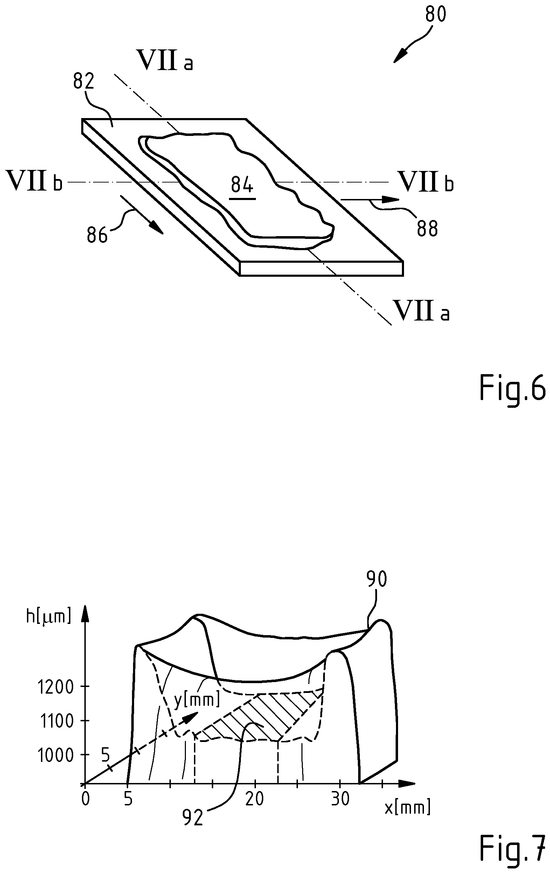

Fig. 6 shows a reference sample 80 with a substrate 82 on which a layer 84 produced by dispensing droplets of printing ink from a print head onto the substrate is produced. In Fig. 7, the height profile 90 of the layer 84 on the substrate 82, i.e. the course of the layer height h along the line VIIa - VIIa in the direction of the arrow 86 and along the line VIIb - VIIb from Fig. 6 in the direction of the arrow 88 above the substrate 82 can be seen. The layer 84 on the substrate 82 is a test pattern.

In order to determine the mean droplet volume Vm, a volume integral VI is determined over the height profile 90 of the layer 84 along the lines VII-VII on Fig. 6 in the section 92 and divided by the number Z of printing ink droplets applied in the section 92, i.e. Vm := VI/N.

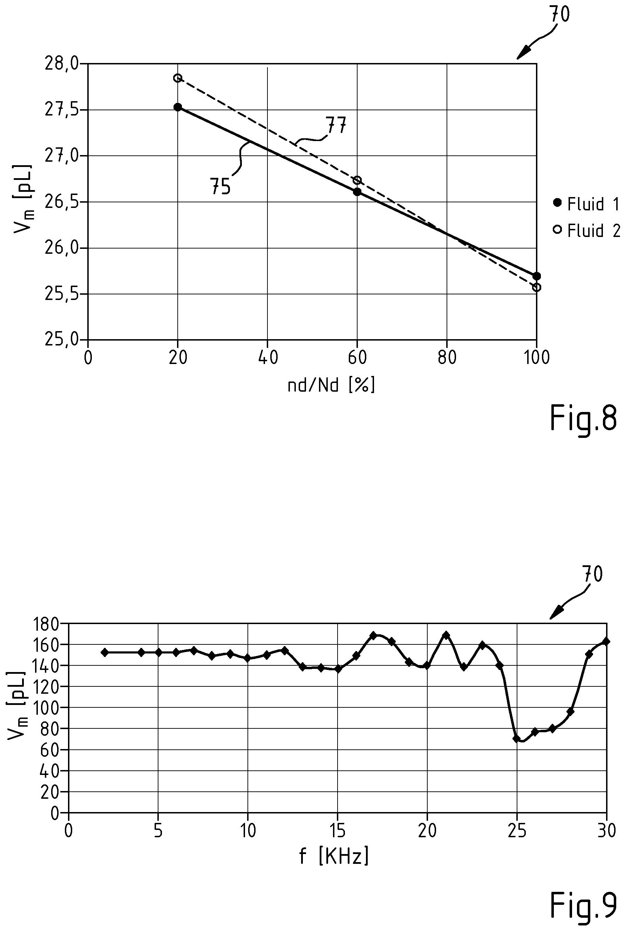

Fig. 8 is a graph 70 in which, as a function of the relative number of active print head nozzles nd/Nd of the print head 12, the mean volume Vm of the printing ink droplets 23 provided by means of the print head 12 for a first printing ink and for a further printing ink is plotted as an operating state variable characterizing the operating state of the print head nozzle arrangement 26.

The inventors have recognized that, as can be seen in Fig. 8, the mean volume Vm of the printing ink droplets 23 provided by means of the print head 12 for different printing inks for a given relative number of active print head nozzles nd/Nd can be determined in each case by means of a calibration curve in the form of the compensation lines 75, 77.

The inventors have also recognized that there is a relationship between the mean volume of printing ink droplets 23 of the printing frequency Df and the speed r at which printing ink droplets emerge from the print head nozzles 30.1.1, ... of a print head nozzle arrangement 26.

Fig. 9 is a graph 70 in which the mean volume Vm of printing ink droplets 23 is plotted as a function of the printing frequency Df. Fig. 9 shows that the volume of the printing ink droplets is essentially constant below the printing frequency Dfm = 10 kHz and assumes very different values above the printing frequency Dfm = 10 kHz depending on the printing frequency Df.

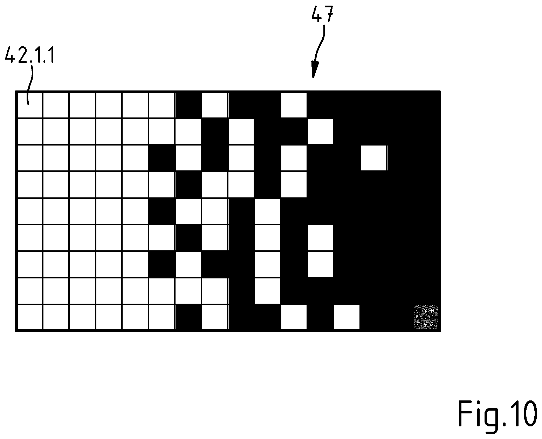

Fig. 10 shows a control rule 47 which converts the gray scale image 44 describing a local layer thickness into a black and white image indicating which print head nozzles 30.1.1, 30.1.2, ... provide a droplet of printing ink 44 in an area element 42.n.m with n = 1, 2, 3, ... and m = 1, 2, 3, ... when printing ink is applied by means of the nozzle head 12.

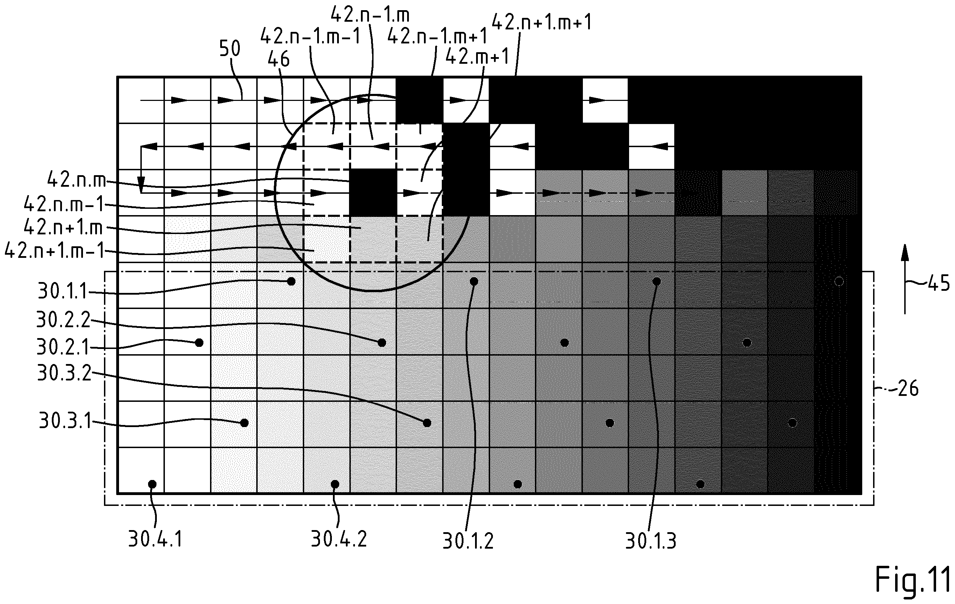

Fig. 11 explains the application of droplets of printing ink 23 to the substrate 18 by means of the print head nozzle arrangement 26 of the print head 12 according to a control rule. The print head 12 with the print head nozzle arrangement 30 is moved uniformly here in the direction of the arrow 45 over the substrate 18, the print head nozzles 30.1.1, ... of the print head nozzle arrangement 26 being actuated according to a control rule in order to apply droplets 23 with 3D printing ink to the substrate 18.

Each print head nozzle 30.1.1 ... makes it possible to arrange a droplet of printing ink 23 for the application of a layer 40.1, 40.2, 40.3 ... shown in Fig. 3 on a substrate 18, as shown in Fig. 1, in a defined surface element 42.n.m, n = 1, 2, 3, ... and m = 1, 2, 3, ... of the layer.

The grid 41, in which the surface elements 42.n.m, n = 1, 2, 3, ... and m = 1, 2, 3, ... are arranged, has rows 42.1.0, 42.2.0, 42.3.0, ... 42.N.0 and columns 42.0.1, 42.0.2, 42.0.3, ..., 42.0.M. The print head nozzles 30.n.m, n = 1, 2, 3, ...; m = 1, 2, 3, ... of the print head nozzle arrangement 26 are displaced relative to the substrate 18 in a direction 45 parallel to the columns 42.0.1, 42.0.2, 42.0.3, ..., 42.0.M of the grid 41.

In one area on the substrate 18, an applied droplet of printing ink 23 spreads over several surface elements 42.n.m of the grid 41 in an area 46 according to the rheological properties of the 3D printing ink.

As a result, a droplet of printing ink 23 wets not only a surface element 42.n.m ... into which it is applied, but also surface elements 42.n-1.m-1, 42.n.m-1, 42.n+1.m-1, 42.n-1.m, 42.n+1.m, 42.n-1.m+1, 42.n.m+1, 42.n.m+1, which surround the surface element 42.n.m. The size of an area 46 wetted on the substrate 18 by a droplet of printing ink 23 is determined by the size of the droplet 23 of 3D printing ink, the surface tension of the printing ink, and the wetting properties of the substrate 18 or the layer on the substrate that is applied to the substrate 18.

The size and thus the volume of the printing ink droplets 23 produced in the print head 12 by the print head nozzles 30.1, 30.2, 30.3, 30.4 is subject to print head nozzle-specific fluctuations. The cause of these fluctuations, which in relative terms can be up to 10% of the droplet volume and which may also be higher, are on the one hand production-related differences between individual print head nozzles 30.1.1, 30.1.2, 30.1.3, 30.1.4, ... of the print head 12. On the other hand, the droplet size of printing ink droplets 23 of a print head nozzle 30.1.1, 30.1.2, 30.1.3, 30.1.4 depends on whether a print head nozzle arranged adjacent to the print head nozzle 30.1.1, 30.1.2 or 30.2.1, 30.2.2 or 30.3.1, 30.3.2 etc. in a row 30.1, 30.2, 30.3, 30.4 simultaneously produces a droplet 23 of printing ink, so that the size of the droplets 23 of printing ink also depends on the operating state of the print head 12 or the way in which the print head 12 is operated.

The inventors have found that the production-related and operation-specific fluctuations in the droplet size of printing ink droplets 23 produced by the print head nozzles 30.1.1, 30.1.2, 30.1.3, ... of the print head nozzle arrangement 26 of the print head 12 must not be neglected in the production of lenses by means of 3D printing, so that the lenses meet the quality requirements placed on them.

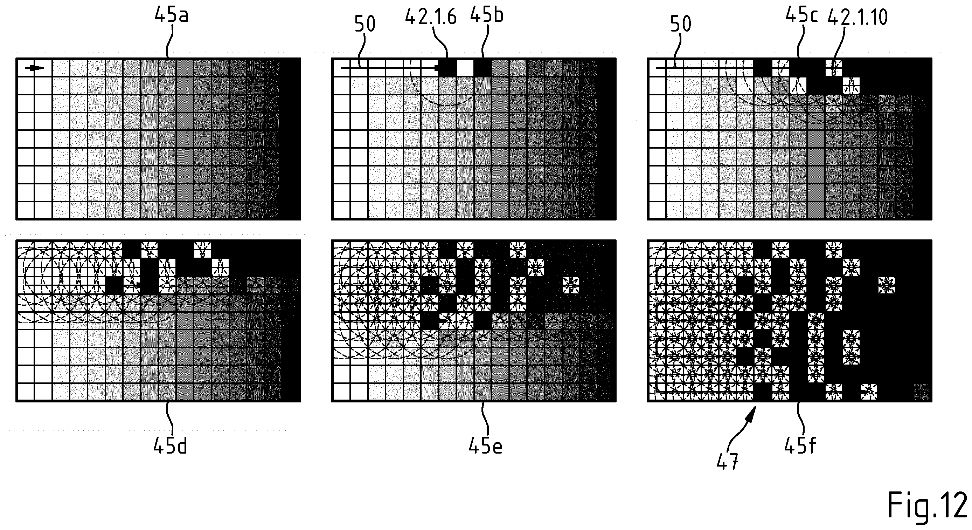

Fig. 12 shows different stages 45a, 45b, 45c, 45d, 45e and 45f for determining a control rule 47 for controlling the print head nozzles 30.n.m, n = 1, 2, 3...; m = 1, 2, 3, ... in the print head nozzle arrangement 26 of the print head 12 to a predetermined location-dependent thickness of a layer on a substrate. Like Fig. 5, Fig. 12 shows the predetermined location-dependent thickness of a layer as a grayscale image.

The control rule 47 specifies on which surface element 42.n.m with n = 1, 2, 3, ... and m = 1, 2, 3, ... of the surface of a layer a droplet of printing ink 23 is applied and on which surface element 42.n.m of the surface of a layer a droplet of printing ink 23 is not applied. If a surface element 42.n.m is black, a droplet of printing ink 23 is applied to it. If, on the other hand, it is not black, a droplet of printing ink 23 is not applied to it.

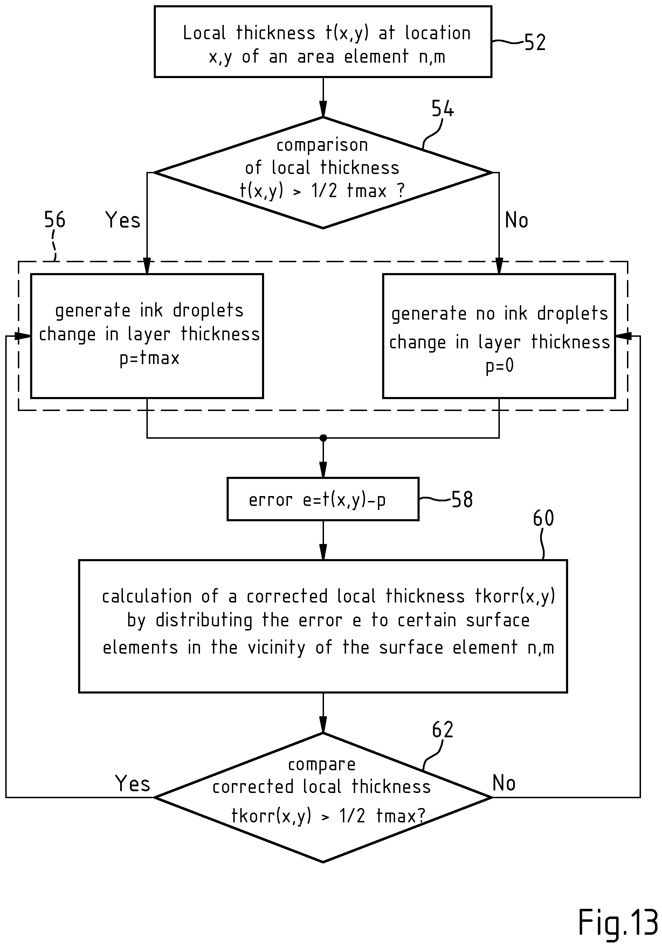

Fig. 13 explains an algorithm 48 for determining the control rule 47 for controlling the print head nozzles 30.1.1, 30.1.2, 30.1.3, ... of the print head nozzle arrangement 26, which, for an assumed droplet volume v of the printing ink droplets 23 produced by the print head nozzles 30.1.1, 30.1.2, 30.1.3, 30.1.4, ... enables the production of a layer of printing ink on the substrate 18 with a location-dependent layer thickness.

The algorithm 48 utilizes the fact that a droplet of printing ink applied to the substrate flows as indicated above and extends, as indicated in Fig. 7, over an area 46 comprising a plurality of surface elements 42.n.m, 42.n.m+1, 42.n.m-1, 42.n-1.m-1, 42.n-1.m, 42.n-1.m+ 1, 42.n+1.m-1, 42.n+1.m, 42n+1.m+1 of the area 46 of the surface in a layer 40.1, 40.2, 40.3, 40.4 ....

By all print head nozzles 30.1.1, 30.1.2, 30.1.3, ... of the print head nozzle arrangement 26 of the print head 12 generating clocked printing ink droplets 23 at the same time in each case, whereby the substrate 18 is uniformly displaced under the print head 12, a printing ink layer with a constant thickness can be applied to the substrate 18.

The control rule 47 includes a routine 52 for specifying a spatially resolved local thickness t(x, y) = t[n,m] of a layer to be printed at the location (x,y) = [n,m] of a surface element 42.n.m. spatially referenced to the print head 12.

For a predetermined local thickness t(x,y) of a layer to be printed at the location x,y of a surface element 42.n.m, the control rule 46 calculates in the steps indicated below along a serpentine counting path 50 shown in Fig. 11 and Fig. 12 by the grid 41 of the surface of the corresponding layer whether a droplet of printing ink 23 is applied to this surface element 42.n.m or not.

In a comparison stage 54, the predetermined local thickness t of a layer to be printed at the location n,m of a first surface element is compared with a maximum layer thickness tmax, which can be applied to a surface with surface elements 42.1 ... by means of the print head nozzle arrangement 26, in that all print head nozzles 30.1.1, 30.2.1, 30.3.1, 30.4.1 of the print head nozzle arrangement 26 of the print head 12 produce droplets of printing ink 23 at a predetermined rate.

If the criterion $t > \frac{1}{2} tmax$ is met, the print head nozzle arrangement 26 provides a droplet of printing ink 23 at the location x,y of a first surface element 42.1 ... of a layer of a signal generated in a functional stage 56. If, on the other hand, the criterion $t > \frac{1}{2} tmax$ is not fulfilled, the function stage 56 causes the print head nozzle arrangement 26 not to produce a droplet of printing ink 23 at the location n,m of the first surface element 42.1.

In an error calculation step 58, a thickness error e of the layer thickness t of the layer to be printed is determined at the location x,y of the first surface element 42.n.m on the basis of the following rule: $e \left(x, y\right) = t \left(x, y\right) - p ,$ where p is the assumed change in the layer thickness of the layer to be printed on this surface element 42.n.m caused by the application of a single printing ink droplet 23 with the assumed printing ink droplet volume v to the surface element 42.1.

**In** a correction stage 60, the local thickness t(x,y) of the layer to be printed is then calculated at the location x,y of the surface elements 42.n.m+1 and 42.n.m+4 lying in the vicinity of the first surface element 42.n.m in a row 42.n of the grid 41, in which the surface elements 42.n.m+1 and 42.n.m+4 are located, as well as the surface elements 42.n+1.m-1, 42.n+1.m and 42.n+1.m+1, which, as shown in Fig. 11 and Fig. 12, are arranged in a row 42.m+1 adjacent to the row 42.m, according to the following provision, if the surface elements are not arranged in a last row or in a first column or in a last column of the grid 41: $tkorr \left[n, m+1\right] : = t \left[n, m+1\right] + 0.4 e \left[n, m\right] ,$ $tkorr \left[n, m+z\right] : = t \left[n, m+z\right] + 0.3 e \left[n, m\right] ,$ $tkorr \left[n+1, m-1\right] : = t \left[n+1, m-1\right] + 0.3 e \left[n, m\right] ,$ $tkorr \left[n+1, m\right] : = t \left[n+1, m\right] - 0.1 e \left[n, m\right] ,$ $tkorr \left[n+1, m+1\right] : = t \left[n+1, m+1\right] + 0.1 e \left[n, m\right] ,$ where z = 4 is the number of rows 30.1, 30.2, 30.3, 30.4 with print head nozzles 30.n.m in the print head nozzle arrangement 26 and [n,m] is the location of the area element 42.n.m in the area of the layer to be printed.

For area elements 42.n.m in a last row M or in a first column 1 or in a last column N of the grid 41, the following applies: tcorr[n, m] := t[n, m].

This distributes the thickness error e determined for the surface element 42.n.m to surface elements that are in the vicinity of the surface element 42.n.m.

In a comparison stage 62, the corrected thickness tkorr of a layer to be printed is then compared at the location [n+ i,m+ j], i, j = 0, 1, 2, 3, ... of a surface element n+i,m+j using the criterion $tkorr > \frac{1}{2} tmax .$

The area element 42.n.m+1 following an area element 42.n.m on the counting path 50 is arranged in the same line of the grid 41 if the area element 42.n.m is not located at one end of a line of the grid 41, in which case the following applies to the location (x,y) of the area element adjacent to the area element 42n.m: $\left(x, y\right) : = \left[n,m+1\right]$

If the area element 42.n.m is located at the end of a line of the grid 41, the following applies to the location (x,y) of the area element following on the counting path 50 $\left(x, y\right) : = \left[n+1,m\right] .$

If the criterion of the comparison stage 62 is fulfilled, the print head nozzle arrangement 26 again provides a droplet of printing ink 23 at the location of the corresponding surface element 42.n.m+1 ... of a layer to be printed on the basis of a signal generated in the signal output routine 56. If the above relation tkorr> ½ tmax is not fulfilled, the print head nozzle arrangement 26 does not generate a droplet of printing ink 23 at the location [n,m] of the first surface element 42.1.

A thickness error of the layer thickness t of the layer to be printed is then determined at the location x,y of the surface element according to the rule of the error calculation stage 58 and then distributed to other surface elements according to the rule of the correction stage 60 of the thickness error determined for the surface element 42.n.m.

Then, on the counting path 50 for a further surface element according to the criterion of the comparison stage 62, the predetermined local thickness is compared with the corrected thickness tkorr of a layer to be printed at the location of the further surface element in order to then control the print head nozzle arrangement 26 at the location of the corresponding surface element 23 on the basis of a signal generated in the function stage 56.

It should be noted that an alternative embodiment of the algorithm 48 described above for determining the control rule 47 for controlling the print head nozzles 30.1.1, 30.1.2, 30.1.3, ... of the print head nozzle arrangement 26 can provide for determining a corrected local thickness tkorr according to the following rule in a correction stage 60 modified with respect to the correction stage 60 shown in Fig. 12, if the surface elements are not arranged in a last row or in a first column or in a last column of the grid 41: $tkorr \left[n+1, m\right] = t \left[n+1, m\right] + \frac{7}{16} e \left[n, m\right]$ $tkorr \left[n-1, m+1\right] = t \left[n-1, m+1\right] + \frac{5}{16} e \left[n, m\right]$ $tkorr \left[n, m+1\right] = t \left[n, m+1\right] + \frac{3}{16} e \left[n, m\right]$ $tkorr \left[n+1, m+1\right] = t \left[n+1, m+1\right] + \frac{1}{16} e \left[n, m\right]$

For area elements 42.n.m in a last row M or in a first column 1 or in a last column N of the grid 41, the following also applies here: tkorr[n, m] := t[n, m].

**In** addition, it should be noted that an alternative embodiment of the above-described algorithm 48 for determining the control rule 47 for controlling the print head nozzles 30.1.1, 30.1.2, 30.1.3, ... of the print head nozzle arrangement 26 can provide, as a counting path along which the control rule 46 calculates for the area elements of a grid 41 whether or not a droplet of printing ink 23 is applied to this area element 42.n.m, a counting path can be provided in which the area element 42.n+i.m+j following an area element 42.n.m on the counting path is arranged adjacent to the area element in the same column of the grid 41 if the area element 42n.m is not located at one end of a column of the grid 41, the location (x, y) of the area element adjacent to the area element 42.n.m then being valid: $\left(x, y\right) : = \left[n+1,m\right]$ and on which applies to the location of the surface element following the surface element 42.n.m: $\left(x, y\right) : = \left[n,m+1\right]$ if the surface element 42.n.m is arranged at the end of a column of the grid 41.

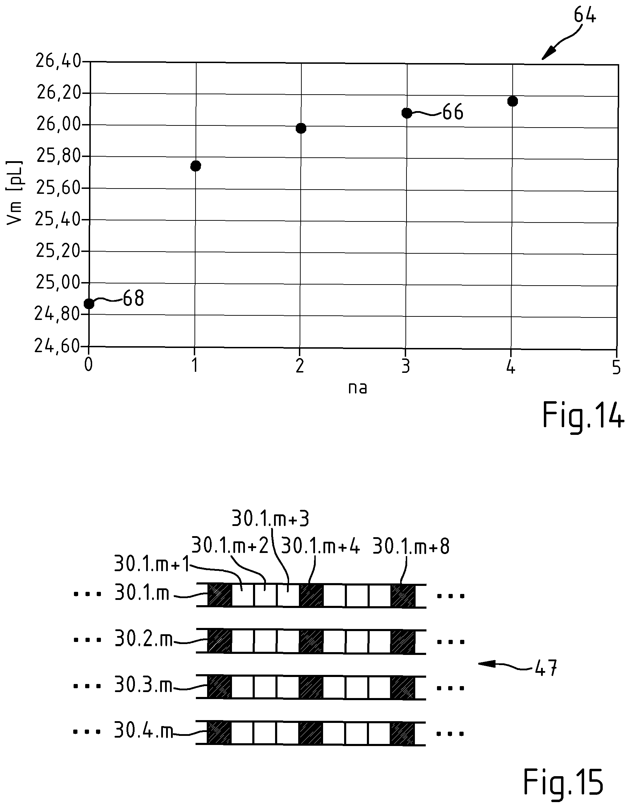

Fig. 14 shows a graph 64 in which the mean droplet volume Vm of printing ink droplets 23 from the print head nozzle 30.1.4 in the nozzle row 30.1 of the nozzle head 12 described with reference to Fig. 2 is plotted as a function of the number na of inactive print head nozzles adjacent thereto as a first print head operating state. It can be seen from the graph 64 that the mean droplet volume Vm of printing ink droplets 23 increases the more print head nozzles adjacent to the print head nozzle 30.1.4 in the nozzle row 30.1 are inactive. The mean printing ink droplet volume Vm of the printing ink droplets 23 produced by the print head nozzle 30.1.4 depends on whether or not print head nozzles adjacent to a print head nozzle 30.1.4 in the nozzle row 30.1 simultaneously provide printing ink . The same applies to all print nozzles 30.n.m of the nozzle head 12 arranged in a nozzle row 30.n with n = 1, 2, 3,

Fig. 15 shows a control rule 47 for controlling the print head nozzles 30.n.m, n = 1, 2, 3...; m = 1, 2, 3, ... in the print head nozzle arrangement 26 of the print head 12, which causes an operating state of the print head 12 in which print head nozzles 30.1.m, 30.1.m+4, 30.1.m+8 and 30.2.m, 30.2.m+4, 30.2.m+8, 30.3.m, 30.3.m+4, 30.3.m+8 and 30.4.m, 30.4.m+4 and 30.4.m+8 are active for the simultaneous provision of a droplet of printing ink. The control rule 47 has the following effects for the print head nozzles 30.1.m-3, 30.1.m-2, 30.1.m+1, 30.1.m+2, 30.1.m+5, 30.1.m+6, 30.1.m+7, 30.1.m-9, 30.1.m+10, 30.1.m+11 and 30.2.m-3, 30.2.m-2, 30.2.m+1, 30.2.m+2, 30.2.m+5, 30.2.m+6, 30.2.m+7, 30.2.m-9, 30.1.m+10, 30.2.m+11; 30.3.m-3, 30.3.m-2, 30.3.m+1, 30.3.m+2, 30.3.m+5, 30.3.m+6, 30.3.m+7, 30.3.m-9, 30.3.m+10, 30.3.m+11 and 30.4.m-3, 30.4.m-2, 30.4.m+1, 30.4.m+2, 30.4.m+5, 30.4.m+6, 30.1.m+7, 30.4.m-9, 30.4.m+10, 30.4.m+11 that they are inactive. According to this control rule, an operating state of the print head 12 is set in which only every fourth print head nozzle in a nozzle row of the print head is active for the simultaneous generation of printing ink droplets, with the remaining print head nozzles of the print head 12 being inactive. This operating state results in the printing ink droplets 23 generated by means of the print head nozzles of the print head 12 having a mean droplet volume Vm corresponding to the graph point 66.

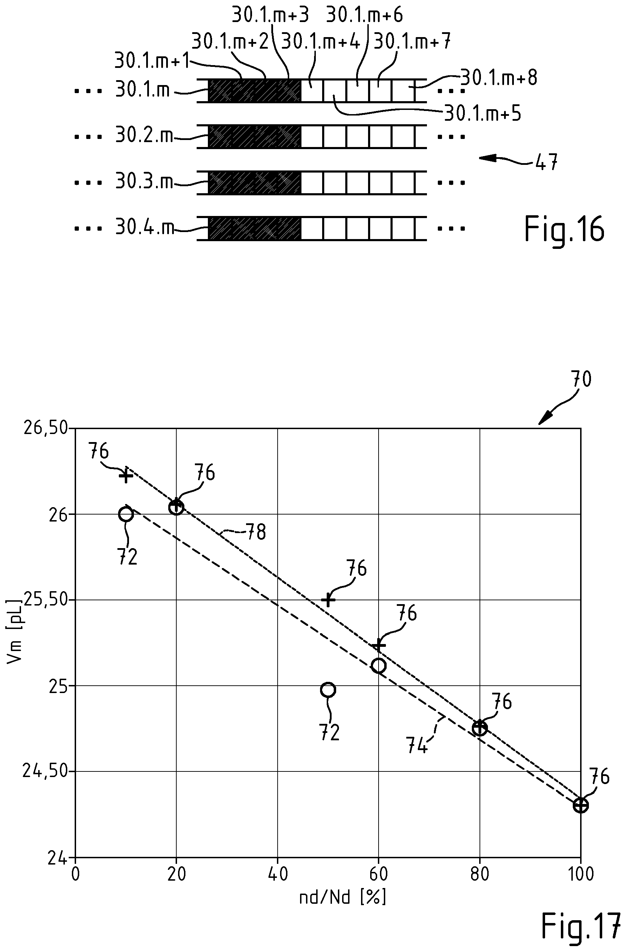

In contrast, Fig. 16 shows a control rule 47 for controlling the print head nozzles 30.n.m, n = 1, 2, 3...; m = 1, 2, 3, ... in the print head nozzle arrangement 26 of the print head 12, which causes an operating state of the print head 12 in which print head nozzles 30.1.m, 30.1.m+1, 30.1.m+2, 30.1.m+3 and print head nozzles 30.2.m, 30.2.m+1, 30.2.m+2, 30.2.m+3, 30.3.m, 30.3.m+1, 30.3.m+2, 30.3.m+3 and 30.4.m, 30.4.m+1, 30.4.m+2, 30.4.m+3 are activated for the simultaneous provision of a droplet of printing ink. The control rule 47 has the following effect for the print head nozzles 30.1.m-3, 30.1.m-2, 30.1.m+4, 30.1.m+5, 30.1.m+6, 30.1.m+7, 30.2.m-3, 30.2.m-2, 30.2.m+4, 30.2.m+5, 30.2.m+6, 30.2.m+7, 30.3.m-3, 30.3.m-2, 30.3.m+4, 30.3.m+5, 30.3.m+6, 30.3.m+7, 30.4.m-3, 30.4.m-2, 30.4.m+4, 30.4.m+5, 30.4.m+6, 30.4.m+7, that they are inactive. According to this control rule, an operating state of the print head 12 is set in which four successive print head nozzles in a nozzle row of the print head are active for the simultaneous generation of printing ink droplets, with the remaining print head nozzles of the print head 12 being inactive. This operating state results in the printing ink droplets 23 generated by means of the print head nozzles of the print head 12 having a mean droplet volume Vm corresponding to the graph point 68.

Fig. 17 is a graph 70 in which Vm, the mean droplet volume of droplets 23 of printing ink provided is plotted in dependence of nd/Nd which is the ratio of the number nd of print head nozzles being active when a layer of constant layer thickness is produced on a surface area A of a substrate by means of the print head 12 and the total number Nd of print head nozzles of the print head. This means nd/Nd is the relative number of print head nozzles being active when a layer of constant layer thickness is produced on the surface area A of the substrate by means of the print head 12.

The mean droplet volume Vm of printing ink droplets 23 from print head nozzles 30.n.m of the print head nozzle arrangement 26 of the print head 12 depends on the one hand on the relative number nd/Nd of print head nozzles 30.n.m simultaneously producing printing ink droplets 23. On the other hand, the mean droplet volume Vm of printing ink droplets 23 from the print head nozzle arrangement 26 of the print head 12 depends on whether the print head nozzles 30.n.m in the print head nozzle arrangement 26 are operated in such a way that the distance between print head nozzles 30.n.m in a nozzle row 30.1, 30.2, 30.3, 30.4, which simultaneously provide a printing ink droplet, is as large as possible for an equal number of printing ink droplets 23 provided by the print head 12 per unit of time.

The graph points 72 show measuring points for the mean droplet volume Vm of printing ink droplets 23 when a layer is produced on a substrate by providing printing ink droplets 23 by means of the print head nozzle arrangement 26 of the print head 12, without taking into account whether and to what extent print head nozzles 30.n.m simultaneously produce printing ink droplets 23 in a nozzle row 30.1, 30.2, 30.3, 30.4. The inventors have recognized that the position in the graph 68, which depends on the relative number nd/Nd of print head nozzles 30.n.m simultaneously producing printing ink droplets 23, can be described by a balancing line 74 fulfilling the following relation $Vm = {a}_{72} nd / Nd + {b}_{72} ,$ a₇₂ and b₇₂ being linear regression fit parameters which are determined based on the graph points 72 corresponding to volume values Vm which are measured for different values of nd/Nd.

One idea of the invention is therefore that, for a given relative number nd/Nd of print head nozzles 30.n.m, a mean droplet volume Vm of printing ink droplets 23 from print head nozzles 30.n.m of the print head nozzle arrangement 26 of the print head 12 can be calculated by linear extrapolation of the graph points 70.

In addition, measuring points for the mean droplet volume Vm of printing ink droplets 23 are plotted as graph points 76 in Fig. 17 when a layer is produced on a substrate by providing printing ink droplets 23 by means of the print head nozzle arrangement 26 of the print head 12, in that the print head nozzles 30.n.m of the print head 12 are controlled for this purpose by means of a control rule which is determined in the algorithm 48 described above with reference to Fig. 10.

**It** is an insight of the invention, as shown in Fig. 17, that for a given relative number nd/Nd of print head nozzles 30.n.m of the print head that simultaneously produce a printing ink droplet 23, the algorithm 48 described with reference to Fig. 17 maximizes a mean volume of printing ink droplet 23. Furthermore, it is a realization of the invention that, as can be seen in Fig. 17, the mean droplet volume Vm of printing ink droplets 23 provided by print head nozzles 30.n.m can be described with very good accuracy by a balancing line 78 that again fulfills the relation $Vm = {a}_{76} nd / Nd + {b}_{76} ,$ a₇₆ and b₇₆ again being linear regression fit parameters which are determined based on the graph points 72 corresponding to volume values Vm which are measured for different values of nd/Nd.

One idea of the invention is therefore to use this knowledge to calculate a mean droplet volume Vm of printing ink droplets 23 for a given relative number nd/Nd of print head nozzles 30.n.m of the print head 12 with high accuracy using the linear relation of Vm and nd/Nd, if the print head nozzles 30.n.m of the print head 12 for building up a layer by applying printing ink in the form of droplets are controlled by means of a control rule 47, which is determined in an algorithm described with reference to Fig. 17 for a predetermined location-dependent layer thickness.

The computer unit 32 of the apparatus 10 for producing an optical element contains a computer program which contains a program routine for determining a control rule 47 which, by means of the algorithm described above with reference to Fig. 13, which converts a grayscale image 44 describing a local layer thickness into a black and white image indicating which print head nozzles 30.1.1, 30.1.2, ... provide a droplet of printing ink 23 in an area element 42.n.m with n= 1, 2, 3 ... and m = 1, 2, 3, ... during the application of printing ink by means of the nozzle head 12. This control rule is fed to the controller 37 of the computer unit 32 so that the piezo actuators of the print head nozzles 30.1.1, 30.1.2, 30.1.3 and 30.1.4 as well as 30.2.1, 30.2.2, 30.2.3, ... 30.3.1, ... 30.4.1, ... of the print head nozzle arrangement 26 and the xy displacement unit 14 in such a way that droplets of printing ink 23 are applied to the substrate 18 arranged on the table 16 in the apparatus 10 for producing an optical element in accordance with the control rule.

It should be noted that in a modified embodiment of the apparatus 10 it may be provided that the program routine for determining the control rule 47, which converts a gray-scale image 44 describing a local layer thickness into a black-and-white image by means of the algorithm described above with reference to Fig. 13, which indicates which print head nozzles 30.1.1, 30.1.2, ... provide a printing ink droplet 23 in an area element 42.n.m when applying printing ink by means of the nozzle head 12, wherein an assumed printing ink droplet volume v is determined as an operating state variable characterizing an operating state of the print head 12, which corresponds to a mean relative number nd/Nd of simultaneously active print head nozzles 30.n.m, n = 1, 2, 3, ... and m = 1, 2, 3, ...determined for a predetermined mean local thickness t(x,y) in an area of the print head nozzle arrangement 26, which are used for the generation of printing ink droplets 23.

In summary, the following preferred features of the invention should be noted in particular:
The invention relates to a method for calibrating an apparatus 10 for the additive manufacturing of an optical element, in particular a spectacle lens, in a printing process by applying droplets of printing ink 23, the apparatus 10 comprising a print head 12 with a print head nozzle arrangement 26 which has a plurality of print head nozzles 30.n.m for producing droplets of printing ink 23. According to the invention, a mean droplet volume Vm of the printing ink droplets 23 is determined as a calibration variable of the apparatus 10 for additively manufacturing an optical element, in particular a spectacle lens. The invention also relates to the manufacture of an optical element, in particular an optical element from the group consisting of lens, intraocular lens, contact lens, spectacle lens, as well as an optical element, in particular an optical element from the group consisting of lens, intraocular lens, contact lens, spectacle lens and an apparatus for the manufacture of an optical element, in particular an optical element from the group consisting of lens, intraocular lens, contact lens, spectacle lens.

### List of reference symbols:

- 10: Apparatus for the manufacture of an optical element
- 12: Print head
- 14: xy displacement unit
- 16: Table
- 18: Substrate
- 20: Level
- 22: Storage container
- 23: Printing ink droplets
- 24: Spectacle lens
- 26: Print head nozzle arrangement
- 30.n.m: Print head nozzle
- 30.n: row
- 32: Computer unit
- 36: Triangle
- 37: Straight
- 38: Model
- 40, 40.n: Layer
- 41: Grid
- 42.n.m with n,m = 1, 2, 3: Surface element
- 42.1.0, 42.2.0, 42.3.0, ...: Line
- 42.0.1, 42.0.2, 42.0.3, ...: Column
- 43: Area
- 44: Grayscale image
- 45: Arrow
- 45a, 45b, 45c, 45d, 45e, 45e: Stage
- 46: Range
- 47: Copntrol rule
- 48: Algorithm
- 50: Counting path
- 52: Routine
- 54: Comparison level for thickness
- 56: Functional level
- 58: Error calculation level
- 60: Correction level
- 62: Comparison level for corrected thickness
- 64, 70: Graph
- 66, 68, 72, 76: Graph point
- 74, 78: Equalizing line
- 80: Reference sample
- 82: Substrate
- 84: Layer
- 86, 88: Arrow
- 90: Elevation profile
- 92: Section
- a_{xy}, b_{xy}: linear regression parameter
- na: number of inactive print head nozzles adjacent to an active print head nozzle in a print head nozzle row
- p: assumed change in layer thickness
- v: assumed printing ink droplet volume
- Vm: mean droplet volume
- Df: printing frequency
- Dfm: maximum printing frequency
- Dg: maximum printing frequency below which there is a linear dependence of the mean droplet volume Vm on the printing frequency Df
- A: standard surface
- Z: number of printing ink droplets applied to a standard surface
- r: speed at which printing ink droplets emerge from the print head nozzles
- z: number of printing ink droplets provided by head nozzle per time unit
- nd: number of print head nozzles being active when a layer of constant layer thickness is produced
- Nd: total number of print head nozzles of the print head

## Claims

1. A method for calibrating an apparatus (10) for additively manufacturing an optical element, in particular a spectacle lens, in a printing process by applying printing ink droplets (23), the apparatus (10) comprising a print head (12) with a print head nozzle arrangement (26) having a plurality of print head nozzles (30.n.m, n = 1, 2, 3, ...; m = 1, 2, 3, ...) for producing printing ink droplets (23),
**characterized in that**
a mean droplet volume Vm of the printing ink droplets (23) is determined as a calibration variable of the apparatus (10).

2. Method according to claim 1, **characterized in that** the mean droplet volume Vm of the printing ink droplets (23) is determined as a function of a variable number Z of printing ink droplets (23) applied uniformly to a standard surface A in a time window of length Δt.

3. Method according to claim 2, **characterized in that** a number z of printing ink droplets (23) provided by each print head nozzle of the print head per time unit t satisfies the following relationship: Df := z/t ≤ 12 kHz, preferably Df := z/t ≤ 10 kHz.

4. Method according to claim 3, **characterized in that** the mean droplet volume Vm of the printing ink droplets (23) that is determined fulfills the following relation: $Vm = a nd / Nd + b ,$ a and b being linear regression fit parameters which are determined based on at least two different droplet volume values which are measured for different values of nd/Nd which is the ratio of the number nd of print head nozzles being active when a layer of constant layer thickness is produced on a surface area A of a substrate by means of the print head (12) and the total number Nd of print head nozzles of the print head (12).

5. The method according to any one of claims 1 to 4, **characterized in that** the mean droplet volume Vm of the printing ink droplets (23) is determined by determining a weight of a known number of printing ink droplets (23) of a printing ink having a known printing ink density applied to a standard area A.

6. The method according to any one of claims 1 to 4, **characterized in that** the mean droplet volume Vm of the printing ink droplets (23) is determined by determining a volume of a printing ink layer (84) produced on a standard area A by dispensing a known number Z of printing ink droplets (23).

7. Method according to claim 6, **characterized in that** the printing ink layer (84) on the standard surface A is subjected to a hardening and/or drying process before the volume thereof on the standard surface A is determined.

8. A method of additively manufacturing an optical element, in particular a spectacle lens, in a printing process by applying droplets of printing ink (23), the method comprising the following steps:
i. providing a substrate (18),
ii. providing a three-dimensional model (38) of the optical element,
iii. digitally slicing the three-dimensional model (38) into individual layers (40.1, 40.2, 40.3, ...), each of which is divided into a grid (41) with surface elements (42.n.m, n = 1, 2, 3, ...; m = 1, 2, 3, ...),
iv. providing at least one printing ink, preferably 3D printing ink,
v. construction of the optical element from the sum of the individual layers (40.1, 40.2, 40.3, ...) by means of a printing process on the substrate (18), in which the printing ink is applied in the form of printing ink droplets (23) to defined surface elements (42.n.m, n = 1, 2, 3, ...; m = 1, 2, 3, ...) of the grid (41) of a single layer, the printing ink droplets being produced by a print head nozzle arrangement (26) with a plurality of print head nozzles (30.n.m, n = 1, 2, 3, ...; m = 1, 2, 3, ...),
wherein the print head nozzles (30.n.m, n = 1, 2, 3, ...; m = 1, 2, 3, ...) of the print head nozzle arrangement (26) are controlled by means of a control rule which takes into account a mean printing ink droplet volume Vm determined in a method according to one of claims 1 to 7 for calibrating an apparatus for additively manufacturing a spectacle lens in a printing process by applying printing ink droplets.

9. Method according to claim 8, **characterized in that** the print head nozzle arrangement (26) contains a plurality of print head nozzles (30.n.m, n = 1, 2, 3, ...; m = 1, 2, 3, ...) which are arranged adjacent to one another in a nozzle row and which can be actuated simultaneously, which each produce a droplet of printing ink (23) when they are actuated, the control rule taking into account a probability with which print head nozzles (30.n.m, n = 1, 2, 3, ...; m = 1, 2, 3, ...) arranged adjacent to one another simultaneously produce a droplet (23) of printing ink.

10. Method according to claim 8 or 9, **characterized in that** the control rule takes into account a printing ink viscosity and/or a printing ink temperature and/or a control voltage for print head nozzles (30.n.m).

11. Method according to one of claims 8 to 10, **characterized in that** Df, the number of droplets of printing ink (23) provided by each print head nozzle (30.n.m) of the print head (12) per unit of time, satisfies the following relationship: Df ≤ 12 kHz, preferably Df ≤ 10 kHz.

12. Method according to one of claims 8 to 11, **characterized in that** the optical element is an optical element from the group consisting of a lens, intraocular lens, contact lens and spectacle lens.

13. Optical element, in particular optical element from the group consisting of lens, intraocular lens, contact lens, spectacle lens, produced by means of a method according to one of claims 8 to 11.

14. An apparatus (10) for manufacturing an optical element comprising a print head (12) having print head nozzles (30.n.m) which serve for the provision of printing ink droplets (23) of a printing ink, with a table (16) which is designed for holding a substrate (18) and which can be displaced relative to the print head (12) in a plane (20) in two mutually perpendicular directions x, y, and with a computer (32) which has a computer program for controlling the print head nozzles (30.n.m),
**characterized in that**
the computer program is used for controlling the print head nozzles (30.n.m) taking into account a calibration quantity of the apparatus (10) determined in a method according to one of claims 1 to 7, wherein the calibration quantity is a mean printing ink droplet volume Vm.
